# EUROPÄISCHE PATENTSCHRIFT

(11) **EP 1 426 774 B1**
(45) Veröffentlichungstag und Bekanntmachung des Hinweises auf die Patenterteilung: **04.05.2011**
(21) Anmeldenummer: 02026774.6
(22) Anmeldetag: 02.12.2002
(51) Int. Cl.: G01R 31/00, H04L 12/40

(54) **Anordnung bestehend aus einem ersten Halbleiter-Baustein und einem mit diesem verbundenen zweiten Halbleiter-Baustein**
System consisting of a first semiconductor device and a second semiconductor device connected to the first device
Système composé d'un premier dispositif semi-conducteur et un deuxième dispositif semi-conducteur connecté au premier

(43) Veröffentlichungstag der Anmeldung: 09.06.2004
(73) Patentinhaber: Infineon Technologies AG, 85579 Neubiberg (DE); ROBERT BOSCH GMBH, 70469 Stuttgart-Feuerbach (DE)
(72) Erfinder: Barrenscheen, Jens, Dr., 81669 München (DE); Rohm, Peter, 85276 Pfaffenhofen a.d.Lim (DE); Aue, Axel, 70825 Korntal-Münchingen (DE); Graf, Jens, 97469 Gochsheim (DE); Roozenbeek, Herman, 71701 Schwieberdingen (DE)

(56) Entgegenhaltungen:
- EP-A- 0 793 111
- DE-A- 19 733 748
- US-A- 5 558 178
- PATENT ABSTRACTS OF JAPAN vol. 2000, no. 14, 5. März 2001 (2001-03-05) -& JP 2000 307592 A (HARNESS SYST TECH RES LTD;SUMITOMO WIRING SYST LTD; SUMITOMO ELECTRIC), 2. November 2000 (2000-11-02)
- PATENT ABSTRACTS OF JAPAN vol. 1999, no. 11, 30. September 1999 (1999-09-30) -& JP 11 163907 A (YAZAKI CORP), 18. Juni 1999 (1999-06-18)
- BARRENSCHEEN J: "Der CAN-Bus im EInsatz mit Drehstrom-Antrieben" ELEKTRONIK PRAXIS, Bd. 33, Nr. 6, 27. März 1998 (1998-03-27), Seiten 92-96, XP008016072
- D. KALINSKY UND R. KALINSKY: "Introduction to Serial Peripheral Interface"[Online] 1. Februar 2002 (2002-02-01), XP002369244 Gefunden im Internet: URL:http://www. embedded.com/showArticle.jhtml?articleID=9 900483>

## Beschreibung

Die vorliegende Erfindung betrifft eine Vorrichtung gemäß dem Oberbegriff des Patentanspruchs 1, d.h. eine Anordnung bestehend aus einem ersten Halbleiter-Baustein und einem mit diesem verbundenen zweiten Halbleiter-Baustein,
- wobei der zweite Halbleiter-Baustein zusätzlich mit elektrischen Verbrauchern verbunden ist, und diese elektrischen Verbraucher entsprechend einem ihm durch Verbrauchersteuerdaten vorgegebenen Timing ansteuert,
- wobei der erste Halbleiter-Baustein zum zweiten Halbleiter-Baustein die erwähnten Verbrauchersteuerdaten sowie den zweiten Halbleiter-Baustein steuernde Kontrolldaten überträgt, und
- wobei der zweite Halbleiter-Baustein zum ersten Halbleiter-Baustein Diagnosedaten überträgt, durch welche im zweiten Halbleiter-Baustein herrschende Zustände oder auftretende Ereignisse repräsentiert werden.

Eine solche Anordnung ist dem Dokument DE 197 33 748 mit der Schnittstelle nach dem Dokument: "Introduction to Serial Peripheral Interface", D. Kalinsky und R. Kalinsky, URL: http://vwvw.embedded.com/showArticle.jhtml?articleID=9900483, XP 002369244 zu entnehmen.

Eine solche Anordnung besteht beispielsweise aus einem Mikrocontroller (erster Halbleiter-Baustein) und einem Power-Baustein (zweiter Halbleiter-Baustein), wobei der Power-Baustein zusätzlich mit zu steuernden elektrischen Verbrauchern verbunden ist.

Im Mikrocontroller wird ein Steuerprogramm ausgeführt, durch welches festgelegt wird, wie die am Power-Baustein angeschlossenen elektrischen Verbraucher anzusteuern sind. Der Mikrocontroller steuert die Verbraucher jedoch nicht selbst an, sondern tut dies über den Power-Baustein.

Der Power-Baustein tut im wesentlichen nichts anderes, als die an ihm angeschlossenen elektrischen Verbraucher entsprechend den Vorgaben des Mikrocontrollers anzusteuern.

Solche Anordnungen kommen beispielsweise zum Einsatz, wenn der Mikrocontroller nicht in der Lage ist, die elektrischen Verbraucher selbst anzusteuern. Dies ist insbesondere der Fall, wenn die den Verbrauchern zuzuführenden Spannungen und/oder Ströme so groß sind, daß sie der Mikrocontroller nicht selbst erzeugen kann oder nur mit einem nicht vertretbaren Aufwand selbst erzeugen könnte.

Solche Anordnungen werden beispielsweise, aber nicht ausschließlich in Kraftfahrzeug-Steuergeräten eingesetzt. Kraftfahrzeug-Steuergeräte müssen unter anderem eine ganze Reihe von Verbrauchern durch Zuführen von Energie und Unterbrechung der Energiezufuhr steuern. Die meisten Verbraucher müssen dabei mit so hohen Spannungen (beispielsweise 12 V) und/oder so hohen Strömen (beispielsweise 1 A und größer) versorgt werden, daß sie nicht von einem Mikrocontroller, aber sehr wohl von einem Power-Baustein erzeugt werden können.

Der Power-Baustein ist durch den Mikrocontroller konfigurierbar, und bekommt vom Mikrocontroller das Timing für die Verbraucher-Ansteuerung vorgegeben.

Die Konfigurierung des Power-Bausteins erfolgt durch die Übertragung von im folgenden als Kontrolldaten bezeichneten Daten an den Power-Baustein. Durch die Konfigurierung des Power-Bausteins kann in diesem beispielsweise eingestellt werden, ob er im normalen Modus oder in einem besonderen Modus, beispielsweise im Sleep-Modus arbeiten soll.

Die Vorgabe des Timings für die Verbraucher-Ansteuerung erfolgt durch die Übertragung von im folgenden als Verbrauchersteuerdaten bezeichneten Signalen oder Daten an den Power-Baustein. Als Verbrauchersteuerdaten können beispielsweise von einem Timer des Mikrocontrollers erzeugte pulsweitenmodulierte Signale verwendet werden.

Der Power-Baustein übermittelt an den Mikrocontroller Statusinformationen, durch welche dem Mikrocontroller im Power-Baustein herrschende Zustände oder auftretende Ereignisse signalisiert werden. Die Statusinformationen werden durch die Übertragung von im folgenden als Diagnosedaten bezeichnete Daten an den Mikrocontroller übermittelt. Durch diese Diagnosedaten kann dem Mikrocontroller beispielsweise signalisiert werden, daß ein Verbraucher zu viel Strom zieht, oder daß eine Übertemperatur vorliegt.

Bei Anordnungen der vorstehend beschriebenen Art stellt unter anderem die Übertragung der Verbrauchersteuerdaten ein Problem dar.

Bis vor kurzem erfolgte die Übertragung derart, daß für jeden der am Power-Baustein angeschlossenen Verbraucher auf einer eigenen Leitung ein eigenes pulsweitenmoduliertes Signal zum Power-Baustein übertragen wurde.

Diese Art der Verbrauchersteuerdaten-Übertragung ist nachteilig, weil der Mikrocontroller und der Power-Baustein in diesem Fall über sehr viele Leitungen miteinander verbunden sein müssen und eine entsprechend große Anzahl von Ein- und/oder Ausgabe-Anschlüssen aufweisen müssen.

Dieses Problem wurde mittlerweile bereits erkannt und durch die Entwicklung des sogenannten Microsecond-Busses abgeschwächt. Der Microsecond-Bus weist die Besonderheit auf, daß die zuvor parallel zum Power-Baustein übertragenen Verbrauchersteuer-Signale in regelmäßigen zeitlichen Abständen, beispielsweise in zeitlichen Abständen von 1 µs abgetastet werden, und daß die Abtastwerte über einen einzigen Übertragungskanal seriell zum Power-Baustein übertragen werden. Der Power-Baustein rekonstruiert aus den ihm zugeführten Daten die abgetasteten pulsweitenmodulierten Signale und steuert die an ihm angeschlossenen Verbraucher entsprechend an. Dadurch läßt sich eine erhebliche Reduzierung der zwischen dem Mikrocontroller und dem Power-Baustein vorzusehenden Leitungen erzielen und entsprechend geringer ist auch die Anzahl der vorzusehenden Ein- und/oder Ausgabeanschlüsse des Mikrocontrollers und des Power-Bausteins.

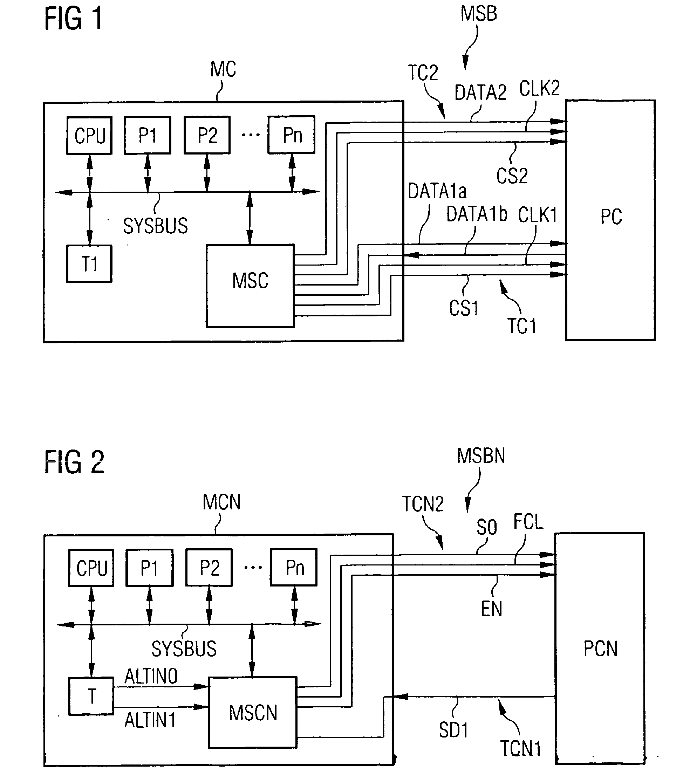

Der prinzipielle Aufbau einer Anordnung, bei welcher ein Mikrocontroller und ein Power-Baustein über einen Microsecond-Bus miteinander verbunden sind, ist in Figur 1 veranschaulicht.

Die Figur 1 zeigt einen Mikrocontroller MC, einen Power-Baustein PC, und einen den Mikrocontroller und den Power-Baustein verbindenden Microsecond-Bus MSB.

Der Mikrocontroller MC enthält eine CPU CPU, einen Timer T, einen Microsecond-Bus-Controller MSC, und diverse weitere Einheiten P1 bis Pn, wobei die genannten Komponenten über einen internen System-Bus SYSBUS miteinander verbunden sind.

Der Timer T erzeugt das Timing der Verbraucher-Ansteuerung vorgebende pulsweitenmodulierten Signale, und führt diese über den System-Bus SYSBUS dem Microsecond-Bus-Controller MSC zu. Der Timer erzeugt im betrachteten Beispiel insgesamt 16 Ausgangssignale, von welchen jedes ein Bit umfaßt, und anzeigt, ob eine im Timer eingestellte, dem jeweiligen Timer-Ausgangssignal zugeordnete Bedingung erfüllt ist oder nicht. Die Timer-Ausgangssignale werden in bestimmten zeitlichen Abständen, beispielsweise in zeitlichen Abständen von 1 µs zum Microsecond-Bus-Controller MSC übertragen, welcher diese Signale seriell über den Microsecond-Bus MSB zum Power-Baustein PC überträgt.

Der Microsecond-Bus MSB umfaßt einen ersten Übertragungskanal TC1 und einen zweiten Übertragungskanal TC2, wobei der erste Übertragungskanal TC1 aus Leitungen DATA1a, DATA1b, CLK1, und CS1 besteht, und wobei der zweite Übertragungskanal TC2 aus Leitungen DATA2, CLK2, und CS2 besteht.

Über die Leitung CLK2 überträgt der Mikrocontroller MC zum Power-Baustein PC ein Übertragungstaktsignal.

Über die Leitung DATA2 überträgt der Mikrocontroller MC zum Power-Baustein PC im Takt des über die Leitung CLK2 übertragenen Übertragungstaktsignals seriell die jeweils aktuellen Pegel der Timer-Ausgangssignale, also die Verbrauchersteuerdaten.

Über die Leitung CS2 überträgt der Mikrocontroller MC zum Power-Baustein PC ein Chip-Select-Signal, durch welches dem Power-Baustein der Beginn und das Ende der Übertragung von für den Power-Baustein bestimmten Daten über die Leitung DATA2 signalisiert wird.

Über die Leitung CLK1 überträgt der Mikrocontroller MC zum Power-Baustein PC ein Übertragungstaktsignal.

Über die Leitung DATA1a überträgt der Mikrocontroller MC zum Power-Baustein PC im Takt des über die Leitung CLK1 übertragenen Übertragungstaktsignals seriell Kontrolldaten, und synchron hierzu überträgt der Power-Baustein PC über die Leitung DATA1b zum Mikrocontroller seriell Diagnosedaten.

Über die Leitung CS1 überträgt der Mikrocontroller MC zum Power-Baustein PC ein Chip-Select-Signal, durch welches dem Power-Baustein der Beginn und das Ende der Übertragung von für den Power-Baustein bestimmten Daten über die Leitung DATA1a signalisiert wird.

Die in der Figur 1 gezeigte Anordnung ist eine Anordnung gemäß dem Oberbegriff des Patentanspruchs 1.

Wie aus den vorstehenden Erläuterungen ersichtlich ist, läßt sich durch die Verwendung des Microsecond-Bus die Anzahl der Leitungen zwischen dem Mikrocontroller MC und dem Power-Baustein PC und damit auch die Anzahl der Ein- und/oder Ausgabeanschlüsse des Mikrocontrollers und des Power-Bausteins erheblich verringern. Zwischen dem Mikrocontroller MC und dem Power-Baustein PC sind nur noch 7 Leitungen vorzusehen; bei der Übertragung der Timer-Ausgangssignale über jeweils eine eigene Leitung wären alleine schon für die Übertragung der Timer-Ausgangssignale 16 Leitungen vorzusehen.

Trotzdem ist die Verwendung eines Microsecond-Bus noch nicht optimal.

Insbesondere wäre es wünschenswert, die Anzahl der zwischen dem Mikrocontroller und dem Power-Baustein vorzusehenden Leitungen noch weiter reduzieren zu können.

Der vorliegenden Erfindung liegt daher die Aufgabe zugrunde, die Anordnung gemäß dem Oberbegriff des Patentanspruchs 1 derart weiterzubilden, daß die zwischen dem ersten Halbleiter-Baustein und dem zweiten Halbleiter-Baustein zu transferierenden Daten über eine geringere Anzahl von Leitungen übertragen werden können.

Diese Aufgabe wird erfindungsgemäß durch die in Patentanspruch 1 beanspruchte Anordnung gelöst.

Die erfindungsgemäße Anordnung zeichnet sich dadurch aus, daß der erste Halbleiter-Baustein dem zweiten Halbleiter-Baustein durch Übertragung entsprechender Kontrolldaten vorgibt, mit welcher Übertragungsrate der zweite Halbleiter-Baustein die Diagnosedaten an den ersten Halbleiter-Baustein zu übertragen hat.

Dadurch entfällt die Notwendigkeit, zwischen dem ersten Halbleiter-Baustein und dem zweiten Halbleiter-Baustein ein Übertragungstaktsignal zu übertragen, welches den Übertragungstakt repräsentiert, mit dem die Diagnosedaten (und gegebenenfalls weitere Daten, die über die selbe Leitung transferiert werden) übertragen werden.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1: den Aufbau der eingangs beschriebenen herkömmlichen Anordnung,
- Figur 2: den Aufbau der im folgenden beschriebenen Anordnung,
- Figur 3: den Aufbau eines Teils der in der Anordnung gemäß Figur 2 enthaltenen Microsecond-Bus-Controllers, und
- Figur 4: den Aufbau eine Diagnosedaten-Frame.

Die im folgenden beschriebene Anordnung bestehen aus einer programmgesteuerten Einheit und einem mit dieser verbundenen Power-Baustein,
- wobei der Power-Baustein zusätzlich mit elektrischen Verbrauchern verbunden ist, und diese elektrischen Verbraucher entsprechend einem ihm durch Verbrauchersteuerdaten vorgegebenen Timing ansteuert,
- wobei die programmgesteuerte Einheit zum Power-Baustein die erwähnten Verbrauchersteuerdaten sowie den Power-Baustein steuernde Kontrolldaten überträgt, und
- wobei der Power-Baustein zur programmgesteuerten Einheit Diagnosedaten überträgt, durch welche im Power-Baustein herrschende Zustände oder auftretende Ereignisse repräsentiert werden.

Die programmgesteuerte Einheit ist im betrachteten Beispiel ein Mikrocontroller, könnte aber auch beispielsweise ein Mikroprozessor oder ein Signalprozessor sein.

Die Besonderheiten der im folgenden beschriebenen Anordnungen können jedoch auch bei anderen Anordnungen zum Einsatz kommen, bei welchen die genannten Daten zu übertragen sind. D.h., sowohl der Mikrocontroller als auch der Power-Baustein könnten auch beliebige andere Bausteine sein.

In Figur 2 ist der prinzipielle Aufbau eines Ausführungsbeispiels der hier vorgestellten Anordnung gezeigt.

Die in der Figur 2 gezeigte Anordnung enthält einen Mikrocontroller MCN, einen Power-Baustein PCN, und einen die genannten Bausteine miteinander verbindenden modifizierten Microsecond-Bus MSBN.

Der modifizierte Microsecond-Bus MSBN ist ein Microsecond-Bus der zweiten Generation und wird im folgenden der Einfachheit halber als Microsecond-Bus bezeichnet. Dies bedeutet jedoch nicht, daß es hierbei um den eingangs unter Bezugnahme auf die Figur 1 beschriebenen Microsecond-Bus handelt. Der hier beschriebene Microsecond-Bus der zweiten Generation weist gegenüber dem eingangs beschriebenen Microsecond-Bus der ersten Generation eine ganze Reihe von später noch genauer beschriebenen Unterschieden auf.

Der Mikrocontroller MCN enthält eine CPU CPU, einen Timer T, einen Microsecond-Bus-Controller MSCN, und diverse weitere Einheiten P1 bis Pn, wobei die genannten Komponenten über einen internen System-Bus SYSBUS miteinander verbunden sind, und wobei der Timer T und der Microsecond-Bus-Controller MSCN über zusätzliche interne Busse ALTINO und ALTIN1 miteinander verbunden sind.

Der Timer T erzeugt die zum Power-Baustein PC zu übertragenen Timer-Ausgangssignale, und führt diese dem Microsecond-Bus-Controller MSCN über die Busse ALTIN0 und ALTIN1 zu. Der Timer erzeugt im betrachteten Beispiel insgesamt 32 Ausgangssignale, von welchen jedes ein Bit umfaßt, und anzeigt, ob eine im Timer eingestellte, dem jeweiligen Timer-Ausgangssignal zugeordnete Bedingung erfüllt ist oder nicht. Die Timer-Ausgangssignale werden in bestimmten zeitlichen Abständen, beispielsweise in zeitlichen Abständen von 1 µs zum Microsecond-Bus-Controller MSCN übertragen, welcher diese Signale seriell über den Microsecond-Bus MSB zum Power-Baustein PC überträgt.

Der Microsecond-Bus MSBN umfaßt einen ersten Übertragungskanal TCN1 und einen zweiten Übertragungskanal TCN2, wobei der erste Übertragungskanal TCN1 aus einer einzigen Leitung SDI besteht, und wobei der zweite Übertragungskanal TCN2 aus Leitungen SO, FCL, und EN besteht.

Über die Leitung FCL überträgt der Mikrocontroller MC zum Power-Baustein PC ein Übertragungstaktsignal. Die Leitung FCL entspricht der Leitung CLK2 der in der Figur 1 gezeigten herkömmlichen Anordnung. Allerdings wird das über die Leitung FCL übertragene Übertragungstaktsignal im allgemeinen eine höhere Frequenz haben als der über die Leitung CLK2 übertragene Übertragungstaktsignal.

Über die Leitung SO überträgt der Mikrocontroller MC zum Power-Baustein PC im Takt des über die Leitung FCL übertragenen Übertragungstaktsignals seriell Verbrauchersteuerdaten und Kontrolldaten. Die Verbrauchersteuerdaten haben den selben Inhalt wie die über die Leitung DATA2 der in der Figur 1 gezeigten Anordnung übertragenen Daten. Allerdings können zwischen den Verbrauchersteuerdaten Kontrolldaten übertragen werden. Die Übertragung der über die Leitung SO zu übertragenden Daten erfolgt also im Zeitmultiplex. Dies wird später noch genauer beschrieben.

Über die Leitung EN überträgt der Mikrocontroller MC zum Power-Baustein PC ein Chip-Select-Signal, durch welches dem Power-Baustein der Beginn und das Ende der Übertragung von für den Power-Baustein bestimmten Daten über die Datenleitung SO signalisiert wird. Die Leitung EN entspricht der Leitung CS2 der in der Figur 1 gezeigten herkömmlichen Anordnung.

Über die Leitung SDI überträgt der Power-Baustein PC zum Mikrocontroller seriell Diagnosedaten. Die Übertragung der Diagnosedaten erfolgt vorzugsweise asynchron. Diese und andere Übertragungsmöglichkeiten werden später noch genauer beschrieben.

Wie erwähnt werden die über die Leitung SO zu übertragenden Daten, also die Verbrauchersteuerdaten und die Kontrolldaten im Zeitmultiplex übertragen.

Der Microsecond-Bus-Controller MSCN generiert intern Zeitfenster konstanter Länge und überträgt in jedem Zeitfenster entweder Verbrauchersteuerdaten, Kontrolldaten, oder keine Daten. Mit der Übertragung der jeweils zu übertragenden Daten wird immer zu Beginn eines Zeitfensters begonnen. Die Übertragung der Verbrauchersteuerdaten erfolgt im betrachteten Beispiel so, daß einem Zeitfenster, in welchem Verbrauchersteuerdaten zum Power-Baustein übertragen wurden, immer n Zeitfenster folgen, in welchem keine Verbrauchersteuerdaten zum Power-Baustein übertragen werden, so daß also in jedem n+1-ten Zeitfenster Verbrauchersteuerdaten zum Power-Baustein übertragen werden. n ist eine durch die CPU des Mikrocontrollers einstellbarer Wert, und liegt im betrachteten Beispiel zwischen 0 und 15. In den Zeitfenstern, die nicht für die Übertragung von Verbrauchersteuerdaten reserviert sind, können Kontrolldaten zum Power-Baustein übertragen werden.

Ein Sonderfall liegt vor, wenn n=0 ist. In diesem Fall existieren keine Zeitfenster, die nicht für die Übertragung von Verbrauchersteuerdaten reserviert sind. Daher wird bei n=0 so vorgegangen, daß die Übertragung von Kontrolldaten Vorrang vor der Übertragung von Verbrauchersteuerdaten hat. D.h., wenn im Microsecond-Bus-Controller MSCN zum Power-Baustein zu übertragende Kontrolldaten vorliegen, werden diese Kontrolldaten anstelle der eigentlich zu übertragenden Verbrauchersteuerdaten übertragen. Daß die Übertragung von Kontrolldaten Vorrang vor der Übertragung von Verbauchersteuerdaten hat, kann auch vorgesehen werden, wenn n zwischen 1 und 15 liegt.

Die pro Zeitfenster übertragenen Verbrauchersteuerdaten umfassen im betrachteten Beispiel jeweils 32 Bits, von welchen jedes für die Steuerung eines anderen Verbrauchers bestimmt ist; der Mikrocontroller kann im betrachteten Beispiel bis zu 32 Verbraucher steuern. Die pro Zeitfenster übertragenen Kontrolldaten umfassen im betrachteten Beispiel ebenfalls jeweils 32 Bits können aber auch mehr Bits oder weniger Bits umfassen. Sowohl die Verbrauchersteuerdaten als auch die Kontrolldaten werden zusammen mit einer Information übertragen, anhand welcher der Power-Baustein ermitteln kann, ob es sich bei den jeweils übertragenen Daten um Verbrauchersteuerdaten oder um Kontrolldaten handelt.

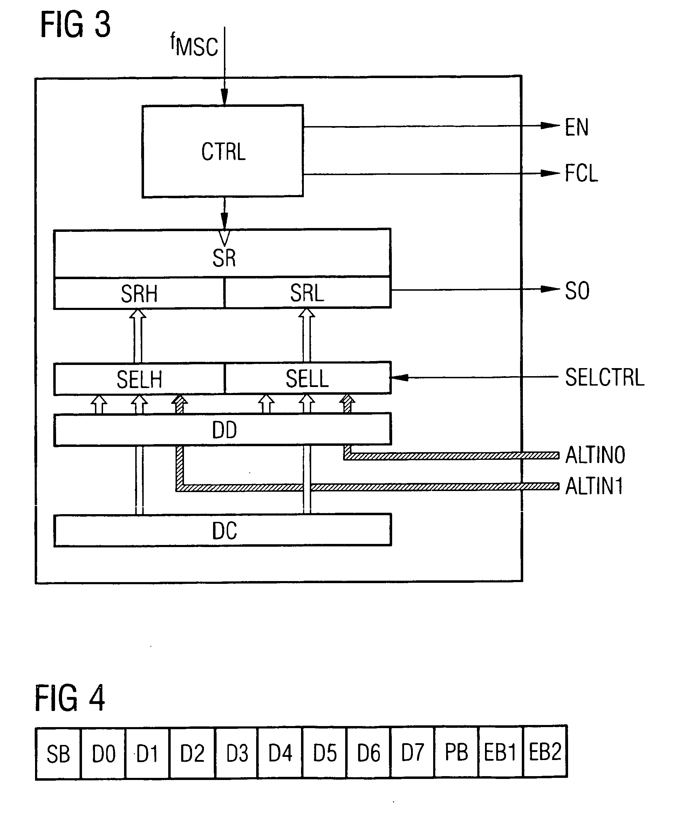

Im folgenden wird unter Bezugnahme auf die Figur 3 der Aufbau des Teils des Microsecond-Bus-Controllers MSCN beschrieben, welcher die über die Leitungen FCL, SO, und EN übertragenen Daten auf diese Leitungen ausgibt.

Der gezeigte Teil des Microsecond-Bus-Controllers MSCN umfaßt eine Steuereinrichtung CTRL, eine Schieberegister SRH und SRL umfassende Schieberegistereinheit SR, Auswahleinrichtungen SELH und SELL, ein Datenregister DD, und ein Kommandoregister DC.

Die Steuereinrichtung CTRL
- erzeugt aus einem der Steuereinrichtung zugeführten Taktsignal f_{MSC} das über die Leitung FCL zu übertragenden Übertragungstaktsignal und gibt dieses auf die Leitung FCL aus,
- erzeugt das über die Leitung EN zu übertragende Chip-Select-Signal und gibt dieses auf die Leitung EN aus, und
- steuert die Schieberegistereinheit SR.

Das Kommandoregister DC ist ein 32 Bits umfassendes Register, in welchem zum Power-Baustein zu übertragende Kontrolldaten gespeichert werden. Diese Daten werden durch die CPU erzeugt und über den Systembus SYSBUS in das Kommandoregister DC geschrieben.

Das Datenregister DD ist ein 32 Bits umfassendes Register, in welchem Verbrauchersteuerdaten gespeichert werden. Diese Daten werden durch die CPU erzeugt und über den Systembus SYSBUS in das Datenregister DC geschrieben.

Die Auswahleinrichtungen SELH und SELL sind den Schieberegistern SRH und SRL vorgeschaltete Einrichtungen, durch welche bestimmt wird, welche Daten in die Schieberegister geschrieben werden.

Der Auswahleinrichtung SELL werden die 16 niederwertigsten Bits des Kommandoregisters DC, die 16 niederwertigsten Bits des Datenregisters DD, und die über Bus ALTIN0 übertragenen, 16 Bits umfassenden Daten zugeführt. Der Auswahleinrichtung SELH werden die 16 höchstwertigsten Bits des Kommandoregisters DC, die 16 höchstwertigsten Bits des Datenregisters DD, und die über Bus ALTIN1 übertragenen, ebenfalls 16 Bits umfassenden Daten zugeführt. Die Auswahleinrichtungen SELL und SELH weisen einen Steueranschluß SELCTRL auf, über welchen einstellbar ist, welche der den Auswahleinrichtungen SELL und SELH zugeführten Daten zu den Schieberegistern SRL und SRH weitergeleitet werden. Die Festlegung erfolgt bitweise. D.h., es ist für jedes einzelne Bit der zu den Schieberegistern SRL und SRH weitergeleiteten Daten festlegbar, aus welcher Quelle es stammt.

Die Steuerung de Auswahleinrichtungen SELL und SELH erfolgt durch die CPU des Mikrocontrollers, oder durch die Steuereinrichtung CTRL.

Die zu den Schieberegistern SRL und SRH weitergeleiteten Daten werden parallel in diese übernommen, und anschließend seriell im Takt des über die Leitung FCL übertragenen Übertragungstaktsignals auf die Leitung SO ausgegeben.

Zeitgleich mit dem Beginn der Übertragung von Daten über die Leitung SO geht das über die Leitung EN übertragene Chip-Select-Signal vom niedrigen Pegel auf den hohen Pegel (oder umgekehrt). Nachdem die innerhalb eines Zeitfensters zu übertragenden Daten übertragen sind, genauer gesagt im wesentlichen zeitgleich hiermit geht das Chip-Select-Signal vom hohen Pegel wieder auf den niedrigen Pegel zurück (oder umgekehrt). Das Chip-Select-Signal signalisiert dem Power-Baustein den Beginn und das Ende der Übertragung von für den Power-Baustein bestimmten Daten über die Leitung SO.

Der Microsecond-Bus-Controller MSCN ist in der Lage, mehrere Power-Bausteine anzusteuern. Dadurch können durch den Microsecond-Bus-Controller MSCN auch mehr Verbraucher angesteuert werden als es der Fall wäre, wenn der Microsecond-Bus-Controller MSCN nur einen einzigen Power-Baustein ansteuern könnte.

Wenn der Microsecond-Bus-Controller MSCN an unterschiedlichen Power-Bausteinen angeschlossene Verbraucher ansteuern können soll, muß für jeden weiteren Power-Baustein eine zusätzliche Chip-Select-Leitung EN vorgesehen werden. Wenn der Microsecond-Bus-Controller MSCN also beispielsweise an vier Power-Bausteine Verbrauchersteuerdaten übertragen können soll, müssen vier Chip-Select-Leitungen EN1 bis EN4 vorgesehen werden, wobei jede dieser Chip-Select-Leitungen mit genau einem Power-Baustein verbunden ist, also beispielsweise die Chip-Select-Leitung EN1 mit dem ersten Power-Baustein, die Chip-Select-Leitung EN2 mit dem zweiten Power-Baustein, die Chip-Select-Leitung EN3 mit dem dritten Power-Baustein, und die Chip-Select-Leitung EN4 mit dem vierten Power-Baustein. Es müssen jedoch nicht mehrere Leitungen FCL und auch nicht mehrere Leitungen SO vorgesehen werden. Die vorhandene einzige FCL-Leitung und die vorhandene einzige SO-Leitung sind jeweils mit allen Power-Bausteinen verbunden. Für welchen Power-Baustein die über die Leitungen FCL und SO übertragenen Daten bzw. Signale bestimmt sind, wird den Power-Bausteinen durch die über die Chip-Select-Leitungen EN1 bis EN4 übertragenen Chip-Select-Signale signalisiert.

Der betrachtete Microsecond-Bus-Controller MSCN weist die Besonderheit auf, daß die innerhalb eines Zeitfensters ausgegebenen Verbrauchersteuerdaten für verschiedene Power-Bausteine bestimmt sein können, also beispielsweise die ersten 16 Bits dieser Daten für einen ersten Power-Baustein, und die restlichen 16 Bits für einen anderen Power-Baustein. D.h., der betrachtete Microsecond-Bus-Controller MSCN ist in der Lage, die Chip-Select-Signale während der Übertragung einer als zusammenhängende Einheit übertragenen Verbrauchersteuerdaten umzuschalten. Dies ist übrigens der Grund dafür daß die Schieberegistereinheit SR nicht nur ein einziges, 32 Bits umfassendes Schieberegister enthält, sondern zwei 16-Bit-Schieberegister SRL und SRH.

Wie vorstehend bereits erwähnt wurde, werden die vom Power-Baustein über die Leitung SDI zum Mikrocontroller übertragenen Diagnosedaten vorzugsweise asynchron übertragen. Die Diagnosedaten werden in Einheiten von Frames übertragen, die im betrachteten Beispiel jeweils 12 Bits umfassen. Der Aufbau eines solchen Frame ist in Figur 4 veranschaulicht.

Der in der Figur 4 gezeigte Frame enthält
- ein zur Synchronisation dienendes Start-Bit SB, welches im betrachteten Beispiel immer den Wert "0" aufweist,
- 8 Bits umfassende Diagnosedaten D0 bis D7,
- ein zur Fehlerkontrolle dienendes Parity-Bit PB,
- zwei zur Synchronisation dienende Stop-Bits EB1 und EB2, welche im betrachteten Beispiel immer den Wert "1" aufweisen.

Es dürfte einleuchten und bedarf keiner näheren Erläuterung, daß der Frame auch einen anderen Aufbau aufweisen könnte. Insbesondere können die Diagnosedaten beliebig viel mehr oder weniger Bits aufweisen, und muß der Frame nicht unbedingt ein Parity-Bit enthalten. Darüber hinaus könnte vorgesehen werden, daß der Frame nur 1 Stop-Bit enthält.

Den Übertragungstakt, mit welchem der Power-Baustein die Bits der Diagnosedaten-Frames überträgt, generiert der Power-Baustein aus dem ihm über die Leitung FCL übermittelten Übertragungstakt: der Power-Baustein teilt den ihm über die Leitung FCL zugeführten Übertragungstakt durch einen ihm vorgegebenen Teilerfaktor und verwendet den daraus resultierenden Takt als Übertragungstakt für die Übertragung der Diagnosedaten. Der Teilerfaktor wird dem Power-Baustein durch den Mikrocontroller vorgegeben. Der Mikrocontroller übermittelt an den Power-Baustein bei der Initialisierung desselben Kontrolldaten, die unter anderem den zu verwendenden Teilerfaktor enthalten.

Da der für die Übertragung der Diagnosedaten verwendete Übertragungstakt im Power-Baustein nach den Vorgaben des Mikrocontrollers erzeugt wird und dem Mikrocontroller folglich bekannt ist, muß weder vom Mikrocontroller zum Power-Baustein, noch vom Power-Baustein zum Mikrocontroller ein Taktsignal übertragen werden, das den für die Diagnosedaten-Übertragung zu verwendenden bzw. verwendeten Übertragungstakt repräsentiert. Dadurch kann die beim Microsecond-Bus der ersten Generation noch vorhandene Übertragungstakt-Leitung CLK1 ersatzlos entfallen.

Da über die Leitung SDI nur Daten vom Power-Baustein zum Mikrocontroller übertragen werden, kann auch die beim Microsecond-Bus der ersten Generation noch vorhandene Chip-Select-Leitung CS1 ersatzlos entfallen.

Die selben positiven Effekte ließen sich erzielen, wenn in den Diagnosedaten-Frames die Start- und Stop-Bits weggelassen werden, und der Mikrocontroller die Phasenlage der Diagnosedaten durch eine Überabtastung der Diagnosedaten ermittelt.

Eine weitere Alternative besteht darin, daß auch der erste Übertragungskanal TCN1 eine Übertragungstakt-Leitung umfaßt, über welche der Power-Baustein zum Mikrocontroller ein Übertragungstaktsignal überträgt, und daß der Power-Baustein die Diagnosedaten im Takt dieses Übertragungstaktsignals überträgt. Hierzu muß zwar eine zusätzlich Leitung vorgesehen werden, doch ist die Gesamtanzahl der zwischen dem Mikrocontroller und dem Power-Baustein vorzusehenden Leitungen dabei immer noch geringer als bei dem eingangs beschriebenen Microsecond-Bus der ersten Generation.

Insbesondere wenn der Mikrocontroller und der Power-Baustein weit voneinander entfernt sind, also lange Leitungen zwischen diesen vorgesehen werden müssen, müssen die Ausgangstreiber des Mikrocontrollers sehr starke Treiber sein. Dadurch können starke elektromagnetische Störungen entstehen.

Um dies zu vermeiden, kann vorgesehen werden, spezielle Treiber zu verwenden, die nur relativ schwache elektromagnetische Störungen verursachen. Solche Treiber sind beispielsweise die sogenannten LVDS-Treiber. Bei der Verwendung von LVDS-Treibern werden die zu übertragenden Daten auf zwei Leitungen anstatt nur auf einer Leitung übertragen, wobei auf der einen Leitung die eigentlich zu übertragenden Daten bzw. Signale übertragen werden, und wobei auf der anderen Leitung komplementäre Daten bzw. Signale übertragen werden.

Wenn der Mikrocontroller solche Treiber aufweist, überträgt er die Daten, die er bei dem in den Figuren 2 und 3 gezeigten und unter Bezugnahme darauf beschriebenen Ausführungsbeispiel über die Leitung SO überträgt, über zwei Leitungen SOP und SON, wobei über die Leitung SOP die Daten übertragen werden, die bei dem in den Figuren 2 und 3 gezeigten Ausführungsbeispiel über die Leitung SO übertragen werden, und wobei über die Leitung SON die komplementären Daten, d.h. die durch einen Inverter invertierten Daten übertragen werden. Entsprechendes gilt für die Daten, die bei dem in den Figuren 2 und 3 gezeigten und unter Bezugnahme darauf beschriebenen Ausführungsbeispiel über die Leitung FCL übertragen'werden. Diese Daten bzw. Signale werden bei Verwendung von LVDS-Treibern über zwei Leitungen FCLP und FCLN übertragen, wobei über die Leitung FCLP die Daten übertragen werden, die bei dem in den Figuren 2 und 3 gezeigten Ausführungsbeispiel über die Leitung FCL übertragen werden, und wobei über die Leitung FCLN die komplementären Daten, d.h. die durch einen Inverter invertierten Daten übertragen werden.

Für die über die Leitungen EN und SDI übertragenen Daten müssen keine LVDS-Treiber oder sonstige EMV-optimierte Treiber verwendet werden, weil die darüber übertragenen Daten vergleichsweise selten ihren Pegel ändern und folglich nur geringe elektromagnetische Störungen verursachen.

Es könnte auch vorgesehen werden, daß für die über die Leitungen FCL und SO zu übertragenden Daten bzw. Signale sowohl normale Treiber als auch LVDS-Treiber vorgesehen werden, und daß der Mikrocontroller Anschlüsse für Leitungen FCL, FCLP, und FCLN, sowie für Leitungen SO, SOP, und SON aufweist. In diesem Fall könnte es von den jeweiligen Verhältnissen abhängig gemacht werden, ob die Verbrauchersteuerdaten und die Kontrolldaten durch einen normalen Treiber und eine einzige Leitung SO oder durch LVDS-Treiber und zwei Leitungen SOP und SON übertragen werden, und ob das Übertragungstaktsignal durch einen normalen Treiber und eine einzige Leitung FCL oder durch LVDS-Treiber und zwei Leitungen FCLP und FCLN übertragen wird.

### Bezugszeichenliste

- ALTIN0: Bus zur Verbindung von T und MSCN
- ALTIN1: Bus zur Verbindung von T und MSCN
- CLK1: Übertragungstakt-Leitung von TC1
- CLK2: Übertragungstakt-Leitung von TC2
- CS1: Chip-Select-Leitung von TC1
- CS2: Chip-Select-Leitung von TC2
- CTRL: Steuereinrichtung
- CPU: CPU
- Dx: Daten-Bit
- DATA1a: Daten-Leitung von TC1
- DATA1b: Daten-Leitung von TC1
- DATA2: Daten-Leitung von TC2
- DC: Kommandoregister
- DD: Datenregister
- EBx: Stop-Bits
- EN: Chip-Select-Leitung von TCN2
- FCL: Übertragungstakt-Leitung von TCN2
- MC: Mikrocontroller
- MCN: Mikrocontroller
- MSB: Microsecond-Bus
- MSBN: modifizierter Microsecond-Bus
- MSC: Microsecond-Bus-Controller
- MSCN: modifizierter Microsecond-Bus-Controller
- Px: Einheiten von MC
- PB: Parity-Bit
- PC: Power-Baustein
- PCN: Power-Baustein
- SB: Start-Bit
- SDI: Daten-Leitung von TCN1
- SELCTRL: Steuerleitung für SELH und SELL
- SELH: Auswahleinrichtung
- SELL: Auswahleinrichtung
- SO: Daten-Leitung von TCN2
- SR: Schieberegister-Einheit
- SRH: Schieberegister
- SRL: Schieberegister
- SYSBUS: interner Systembus
- T: Timer
- TC1: erster Übertragungskanal
- TCN1: erster Übertragungskanal
- TC2: zweiter Übertragungskanal
- TCN2: zweiter Übertragungskanal

## Patentansprüche

1. Anordnung bestehend aus einem ersten Halbleiter-Baustein (MCN) und einem mit diesem verbundenen zweiten Halbleiter-Baustein (PCN),
- wobei der zweite Halbleiter-Baustein zusätzlich mit elektrischen Verbrauchern verbunden ist, und diese elektrischen Verbraucher entsprechend einem ihm durch Verbrauchersteuerdaten vorgegebenen Timing ansteuert,
- wobei der erste Halbleiter-Baustein zum zweiten Halbleiter-Baustein die erwähnten Verbrauchersteuerdaten sowie den zweiten Halbleiter-Baustein steuernde Kontrolldaten überträgt,
- wobei der zweite Halbleiter-Baustein zum ersten Halbleiter-Baustein Diagnosedaten überträgt, durch welche im zweiten Halbleiter-Baustein herrschende Zustände oder auftretende Ereignisse repräsentiert werden, und
- wobei der erste Halbleiter-Baustein dem zweiten Halbleiter-Baustein durch Übertragung entsprechender Kontrolldaten vorgibt, mit welcher Übertragungsrate der zweite Halbleiter-Baustein die Diagnosedaten an den ersten Halbleiter-Baustein zu übertragen hat,
**dadurch gekennzeichnet,**
**daß** die Übertragung entsprechender Kontrolldaten die Übermittlung eines Teilerfaktors beinhaltet, und
**daß** der zweite Halbleiter-Baustein (PCN) die Frequenz eines ihm vom ersten Halbleiter-Baustein (MCN) zugeführten Ubertragungstaktsignals (FCL) durch den Teilerfaktor teilt und die Diagnosedaten im Takt des daraus resultierenden übertragungstaktsignals zum ersten Halbleiter-Baustein (MCN) überträgt.

2. Anordnung nach Anspruch 1,
**dadurch gekennzeichnet,**
**daß** der erste Halbleiter-Baustein eine programmgesteuerte Einheit ist.

3. Anordnung nach Anspruch 1,
**dadurch gekennzeichnet,**
**daß** der zweite Halbleiter-Baustein ein Power-Baustein ist.

4. Anordnung nach Anspruch 1,
**dadurch gekennzeichnet,**
**daß** die Übertragung der Diagnosedaten im Takt eines im zweiten Halbleiter-Baustein generierten Übertragungstaktsignals erfolgt, und daß dieses Übertragungstaktsignal nicht zum ersten Halbleiter-Baustein übertragen wird.

5. Anordnung nach Anspruch 1,
**dadurch gekennzeichnet,**
**daß** das dem zweiten Halbleiter-Baustein zugeführte Übertragungstaktsignal den Übertragungstakt repräsentiert, mit welchem der erste Halbleiter-Baustein die Verbrauchersteuerdaten oder die Kontrolldaten an den zweiten Halbleiter-Baustein überträgt.

6. Anordnung nach Anspruch 1,
**dadurch gekennzeichnet,**
**daß** die Diagnosedaten in Einheiten von Frames übertragen werden, wobei ein Frame mit einem einen vorgegebenen Wert aufweisenden Start-Bit beginnt, und mit einem oder zwei, vorgegebene Werte aufweisenden Stop-Bits endet.

7. Anordnung nach Anspruch 1,
**dadurch gekennzeichnet,**
**daß** der erste Halbleiter-Baustein die Phasenlage der Diagnosedaten durch Überabtastung der Diagnosedaten ermittelt.

8. Anordnung nach Anspruch 1,
**dadurch gekennzeichnet,**
**daß** die Diagnosedaten über eine Leitung übertragen werden, über welche weder Verbrauchersteuerdaten noch Kontrolldaten übertragen werden.

9. Anordnung nach Anspruch 1,
**dadurch gekennzeichnet,**
**daß** die Übertragung der Verbrauchersteuerdaten und der Kontrolldaten über einen zweiten Übertragungskanal erfolgt.

10. Anordnung nach Anspruch 9,
**dadurch gekennzeichnet,**
**daß** der zweite Übertragungskanal aus
- einer Übertragungstakt-Leitung, über welche der erste Halbleiter-Baustein ein Übertragungstaktsignal zum zweiten Halbleiter-Baustein überträgt,
- einer Datenleitung, über welche der erste Halbleiter-Baustein im Takt des Übertragungstaktsignals die Verbrauchersteuerdaten und die Kontrolldaten zum zweiten Halbleiter-Baustein überträgt, und
- einer Chip-Select-Leitung, über welche der erste Halbleiter-Baustein ein Chip-Select-Signal zum zweiten Halbleiter-Baustein überträgt, durch welches dem zweiten Halbleiter-Baustein der Beginn und das Ende der Übertragung von für den zweiten Halbleiter-Baustein bestimmten Daten über die Datenleitung signalisiert wird,
besteht.

11. Anordnung nach Anspruch 1,
**dadurch gekennzeichnet,**
**daß** die Übertragung der Verbrauchersteuerdaten und der Kontrolldaten in Einheiten von Frames erfolgt, und daß die Verbrauchersteuerdaten-Frames und die Kontrolldaten-Frames im Zeitmultiplex-Verfahren übertragen werden.

12. Anordnung nach Anspruch 11,
**dadurch gekennzeichnet,**
**daß** der erste Halbleiter-Baustein Zeitfenster konstanter Länge definiert, und in jedem Zeitfenster entweder einen Verbrauchersteuerdaten-Frame, oder einen Kontrolldaten-Frame, oder keine Daten überträgt.

13. Anordnung nach Anspruch 12,
**dadurch gekennzeichnet,**
**daß** der erste Halbleiter-Baustein nach der Übertragung eines Verbrauchersteuerdaten-Frame jeweils n Zeitfenster lang keinen Verbrauchersteuerdaten-Frame mehr überträgt, wobei n≥0 ist, und wobei n durch den Benutzer der Anordnung einstellbar ist.

14. Anordnung nach Anspruch 13,
**dadurch gekennzeichnet,**
**daß** ein Kontrolldaten-Frame nur in einem Zeitfenster übertragen werden kann, in welchem kein Verbrauchersteuerdaten-Frame zu übertragen ist.

15. Anordnung nach Anspruch 12 oder 13,
**dadurch gekennzeichnet,**
**daß** dann, wenn gleichzeitig Verbrauchersteuerdaten und Kontrolldaten zur Übertragung anstehen, die Übertragung der Kontrolldaten Vorrang hat.

16. Anordnung nach Anspruch 9,
**dadurch gekennzeichnet,**
**daß** der zweite Übertragungskanal aus
- einer ersten Übertragungstakt-Leitung, über welche der erste Halbleiter-Baustein ein Übertragungstaktsignal zum zweiten Halbleiter-Baustein überträgt,
- einer zweiten Übertragungstakt-Leitung, über welche der erste Halbleiter-Baustein das inverse Übertragungstaktsignal an den zweiten Halbleiter-Baustein überträgt,
- einer ersten Datenleitung, über welche der erste Halbleiter-Baustein im Takt des Übertragungstaktsignals die Verbrauchersteuerdaten und die Kontrolldaten zum zweiten Halbleiter-Baustein überträgt,
- einer zweiten Datenleitung, über welche der erste Halbleiter-Baustein die inversen Verbrauchersteuerdaten und die inversen Kontrolldaten an den zweiten Halbleiter-Baustein überträgt, und
- einer Chip-Select-Leitung, über welche der erste Halbleiter-Baustein ein Chip-Select-Signal zum zweiten Halbleiter-Baustein überträgt, durch welches dem zweiten Halbleiter-Baustein der Beginn und das Ende der Übertragung von für den zweiten Halbleiter-Baustein bestimmten Daten über die Datenleitung signalisiert wird,
besteht.

17. Anordnung nach Anspruch 16,
**dadurch gekennzeichnet,**
**daß** die Ausgangstreiber des ersten Halbleiter-Bausteins, durch welche die Verbrauchersteuerdaten, die Kontrolldaten, und das Übertragungstaktsignal ausgegeben werden, LVDS-Treiber oder sonstige Spezialtreiber sind, durch deren Verwendung sich elektromagnetische Störungen gering halten lassen.

18. Anordnung nach Anspruch 1,
**dadurch gekennzeichnet,**
**daß** der erste Halbleiter-Baustein für die Ausgabe der Verbrauchersteuerdaten, der Kontrolldaten, und des Übertragungstaktsignals jeweils mehrere verschiedene Ausgangstreiber aufweist, und daß dem ersten Halbleiter-Baustein vorgebbar ist, welcher der mehreren verschiedenen Ausgangstreiber jeweils verwendet werden soll.

## Claims

1. Arrangement comprising a first semiconductor chip (MCN) and a second semiconductor chip (PCN) connected thereto,
- where the second semiconductor chip is additionally connected to electrical loads and drives these electrical loads on the basis of a timing which is prescribed to it by load control data,
- where the first semiconductor chip transmits to the second semiconductor chip the aforementioned load control data and pilot data which control the second semiconductor chip,
- where the second semiconductor chip transmits to the first semiconductor chip diagnostic data which represent states prevailing in the second semiconductor chip or events which occur, and
- where the first semiconductor chip transmits appropriate pilot data in order to prescribe to the second semiconductor chip what transmission rate is to be used by the second semiconductor chip to transmit the diagnostic data to the first semiconductor chip,
**characterized in that**
the transmission of appropriate pilot data involves the transmission of a division factor, and **in that** the second semiconductor chip (PCN) divides the frequency of a transmission clock signal (FCL) supplied to it by the first semiconductor chip (MCN) by the division factor and transmits the diagnostic data to the first semiconductor chip (MCN) in time with the resultant transmission clock signal.

2. Arrangement according to Claim 1,
**characterized in that**
the first semiconductor chip is a program-controlled unit.

3. Arrangement according to Claim 1
**characterized in that**
the second semiconductor chip is a power chip.

4. Arrangement according to Claim 1,
**characterized in that**
the diagnostic data are transmitted in time with a transmission clock signal generated in the second semiconductor chip, and **characterized in that** this transmission clock signal is not transmitted to the first semiconductor chip.

5. Arrangement according to Claim 1,
**characterized in that**
the transmission clock signal supplied to the second semiconductor chip represents the transmission clock which is used by the first semiconductor chip to transmit the load control data or the pilot data to the second semiconductor chip.

6. Arrangement according to Claim 1,
**characterized in that**
the diagnostic data are transmitted in units of frames, where a frame starts with a start bit having a prescribed value and ends with one or two stop bits having prescribed values.

7. Arrangement according to Claim 1,
**characterized in that**
the first semiconductor chip ascertains the phase of the diagnostic data by oversampling the diagnostic data.

8. Arrangement according to Claim 1,
**characterized in that**
the diagnostic data are transmitted via a line via which neither load control data nor pilot data are transmitted.

9. Arrangement according to Claim 1,
**characterized in that**
the load control data and the pilot data are transmitted via a second transmission channel.

10. Arrangement according to Claim 9,
**characterized in that**
the second transmission channel comprises
- a transmission clock line via which the first semiconductor chip transmits a transmission clock signal to the second semiconductor chip,
- a data line via which the first semiconductor chip transmits the load control data and the pilot data to the second semiconductor chip in time with the transmission clock signal, and
- a chip select line via which the first semiconductor chip transmits the chip select signal to the second semiconductor chip, said chip select signal signaling to the second semiconductor chip the start and end of the transmission of data intended for the second semiconductor chip via the data line.

11. Arrangement according to Claim 1,
**characterized in that**
the load control data and the pilot data are transmitted in units of frames, and **characterized in that** the load control data frames and the pilot data frames are transmitted using time-division multiplexing.

12. Arrangement according to Claim 11,
**characterized in that**
the first semiconductor chip defines time windows of constant length and transmits in each time window either a load control data frame or a control data frame or no data.

13. Arrangement according to Claim 12,
**characterized in that**
the first semiconductor chip transmits no further load control data frame for a respective length of n time windows after transmission of a load control data frame, where n≥0 and where n can be set by the user of the arrangement.

14. Arrangement according to Claim 13,
**characterized in that**
a pilot data frame can be transmitted only in a time window in which no load control data frame is to be transmitted.

15. Arrangement according to Claim 12 or 13,
**characterized in that**
transmission of the pilot data has priority when load control data and pilot data are awaiting transmission simultaneously.

16. Arrangement according to Claim 9,
**characterized in that**
the second transmission channel comprises
- a first transmission clock line via which the first semiconductor chip transmits a transmission clock signal to the second semiconductor chip,
- a second transmission clock line via which the first semiconductor chip transmits the inverse transmission clock signal to the second semiconductor chip,
- a first data line via which the first semiconductor chip transmits the load control data and the pilot data to the second semiconductor chip in time with the transmission clock signal,
- a second data line via which the first semiconductor chip transmits the inverse load control data and the inverse pilot data to the second semiconductor chip, and
- a chip select line via which the first semiconductor chip transmits a chip select signal to the second semiconductor chip, said chip select signal signaling to the second semiconductor chip the start and end of the transmission of data intended for the second semiconductor chip via the data line.

17. Arrangement according to Claim 16,
**characterized in that**
the output drivers on the first semiconductor chip, which output the load control data, the pilot data and the transmission clock signal, are LVDS drivers or other special drivers whose use allows electromagnetic interference to be kept down.

18. Arrangement according to Claim 1,
**characterized in that**
the first semiconductor chip has a plurality of respective different output drivers for outputting the load control data, the pilot data and the transmission clock signal, and **in that** the first semiconductor chip can have prescribed to it which of the plurality of different output drivers needs to be used in each case.

## Revendications

1. Dispositif constitué d'un premier module (MCN) à semi-conducteur et d'un deuxième module (PCN) à semi-conducteur relié à celui-ci,
- dans lequel le deuxième module à semi-conducteur est relié supplémentairement à des utilisateurs d'électricité et commande ces utilisateurs d'électricité en fonction d'un timing qui lui est prescrit par des données de commande d'utilisateur,
- dans lequel le premier module à semi-conducteur transmet au deuxième module à semi-conducteur les données de commande d'utilisateur mentionnées, ainsi que les données de contrôle commandant le deuxième module à semi-conducteur,
- dans lequel le deuxième module à semi-conducteur transmet au premier module à semi-conducteur des données de diagnostic, par lesquelles des états régnant dans le deuxième module à semi-conducteur ou des évènements se produisant sont représentés, et
- dans lequel le premier module à semi-conducteur prescrit au deuxième module à semi-conducteur, par transmission de données de contrôle correspondantes, la vitesse de transmission à laquelle le deuxième module à semi-conducteur a transmis les données de diagnostic au premier module à semi-conducteur,
**caractérisé**
**en ce que** la transmission de données de contrôle correspondantes comporte la transmission d'un facteur de division, et
**en ce que** le deuxième module (PCN) à semi-conducteur divise par le facteur de division la fréquence d'un signal (FCL) d'horloge de transmission qui lui est envoyé par le premier module (MCN) à semi-conducteur et transmet les données de diagnostic au premier module (MCN) à semi-conducteur à la cadence du signal de transmission qui s'ensuit.

2. Dispositif suivant la revendication 1,
**caractérisé**
**en ce que** le premier module à semi-conducteur est une unité commandée par programme.

3. Dispositif suivant la revendication 1,
**caractérisé**
**en ce que** le deuxième module à semi-conducteur est un module de puissance.

4. Dispositif suivant la revendication 1,
**caractérisé**
**en ce que** la transmission des données de diagnostic s'effectue à la cadence d'un signal d'horloge de transmission produit dans le deuxième module à semi-conducteur et en ce que ce signal d'horloge de transmission n'est pas transmis au premier module à semi-conducteur.

5. Dispositif suivant la revendication 1,
**caractérisé**
**en ce que** le signal d'horloge de transmission envoyé au deuxième module à semi-conducteur représente la cadence de transmission à laquelle le premier module à semi-conducteur transmet les données de commande d'utilisateur ou les données de contrôle au deuxième module à semi-conducteur.

6. Dispositif suivant la revendication 1,
**caractérisé**
**en ce que** les données de diagnostic sont transmises dans des unités de trame, une trame commençant par un bit de début ayant une valeur prescrite et se terminant par des bits d'arrêt ayant une ou deux valeurs prescrites.

7. Dispositif suivant la revendication 1,
**caractérisé**
**en ce que** le premier module à semi-conducteur détermine la position en phase des données de diagnostic en suréchantillonnant les données de diagnostic.

8. Dispositif suivant la revendication 1,
**caractérisé**
**en ce que** les données de diagnostic sont transmises par une ligne par laquelle ni des données de commande d'utilisateur ni des données de contrôle ne sont transmises.

9. Dispositif suivant la revendication 1,
**caractérisé**
**en ce que** la transmission des données de commande d'utilisateur et des données de contrôle s'effectuent par un deuxième canal de transmission.

10. Dispositif suivant la revendication 9,
**caractérisé**
**en ce que** le deuxième canal de transmission est constitué
- d'une ligne de cadence de transmission, par laquelle le premier module à semi-conducteur transmet un signal d'horloge de transmission au deuxième module à semi-conducteur,
- d'une ligne de données, par laquelle le premier module à semi-conducteur transmet à la cadence du signal d'horloge de transmission des données de commande d'utilisateur et des données de contrôle au deuxième module à semi-conducteur, et
- d'une ligne chip-select, par laquelle le premier module à semi-conducteur transmet un signal chip-select au deuxième module à semi-conducteur, signal par lequel il est signalé au deuxième module à semi-conducteur le début et la fin de la transmission de données destinées au deuxième module à semi-conducteur par la ligne de données.

11. Dispositif suivant la revendication 1,
**caractérisé**
**en ce que** la transmission des données de commande d'utilisateur et des données de contrôle s'effectue dans des unités de trame et en ce que les trames de données de commande d'utilisateur et les trames de données de contrôle sont transmises dans le procédé de multiplexage dans le temps.

12. Dispositif suivant la revendication 11,
**caractérisé**
**en ce que** le premier module à semi-conducteur définit des créneaux temporels de longueur constante et transmet dans chaque créneau temporel soit une trame de données de commande d'utilisateur, soit une trame de données de contrôle, soit pas de donnée.

13. Dispositif suivant la revendication 12,
**caractérisé**
**en ce que** le premier module à semi-conducteur ne transmet plus, après la transmission d'une trame de données de commande d'utilisateur de respectivement n créneaux temporels, de trame de données de commande d'utilisateur, n étant supérieur ou égal à 0 et n pouvant être réglé par l'opérateur du dispositif.

14. Dispositif suivant la revendication 13,
**caractérisé**
**en ce qu'**une trame de données de contrôle ne peut être transmise que dans un créneau temporel dans lequel il n'y a pas de trame de données de commande d'utilisateur à transmettre.

15. Dispositif suivant la revendication 12 ou 13,
**caractérisé**
**en ce que**, si en même temps des données de commande d'utilisateur et des données de contrôle sont en attente de transmission, la transmission des données de contrôle a priorité.

16. Dispositif suivant la revendication 9,
**caractérisé**
**en ce que** le deuxième canal de transmission est constitué
- d'une première ligne de cadence de transmission, par laquelle le premier module à semi-conducteur transmet un signal d'horloge de transmission au deuxième module à semi-conducteur,
- d'une deuxième ligne de cadence de transmission par laquelle le premier module à semi-conducteur transmet le signal inverse d'horloge de transmission au deuxième module à semi-conducteur,
- d'une première ligne de données, par laquelle le premier module à semi-conducteur transmet à la cadence du signal d'horloge de transmission les données de commande d'utilisateur et les données de contrôle au deuxième module à semi-conducteur,
- d'une deuxième ligne de données, par laquelle le premier module à semi-conducteur transmet les données inverses de commande d'utilisateur et les données inverses de contrôle au deuxième module à semi-conducteur, et
- d'une ligne chip-select par laquelle le premier module à semi-conducteur transmet un signal ship-select au deuxième module à semi-conducteur, signal par lequel il est signalé au deuxième module à semi-conducteur le début et la fin de la transmission de données destinées au deuxième module à semi-conducteur par la ligne de données.

17. Dispositif suivant la revendication 16,
**caractérisé**
**en ce que** les circuits d'attaque de sortie du premier module à semi-conducteur, par lesquels les données de commande d'utilisateur, les données de contrôle et le signal d'horloge de transmission sont émis, sont des circuits d'attaque LVDS ou d'autres circuits d'attaque spéciaux, par l'utilisation desquels on peut maintenir à un niveau bas des parasites électromagnétiques.

18. Dispositif suivant la revendication 1,
**caractérisé**
**en ce que** le premier module à semi-conducteur a, pour la sortie des données de commande d'utilisateur, des données de contrôle et du signal d'horloge de transmission, respectivement plusieurs circuits d'attaque de sortie et en ce qu'il peut être prescrit au premier module à semi-conducteur celui des plusieurs circuits d'attaque de sorties différents, qui doit être utilisé respectivement.
